# EUROPEAN PATENT APPLICATION

(11) **EP 4 506 660 A1**
(43) Date of publication of application: **12.02.2025**
(21) Application number: 23190635.5
(22) Date of filing: 09.08.2023
(51) Int. Cl.: G01C 19/5776, G01C 25/00

(54) **GYROSCOPE SYSTEMS**

(71) Applicant: ATLANTIC INERTIAL SYSTEMS LIMITED, Plymouth, Devon PL6 6DE (GB)
(72) Inventor: HENDERSON, Geoff Thomas, Yelverton (GB); FELL, Christopher Paul, Cheltenham (GB); OGLE, Thomas Reed, Ogwell (GB); TOWNSEND, Kevin, Liskeard (GB)
(74) Representative: Dehns

(57) **Abstract**

A gyroscope system comprising at least one vibrating structure gyroscope having a structure, one or more drive transducers configured to drive the structure and one or more pick off transducers configured to detect oscillation of the structure, the vibrating structure gyroscope being configured to operate in a sensing mode or a diagnostic mode, the vibrating structure gyroscope being configured, during the sensing mode, to measure an angular rate of rotation of the vibrating structure gyroscope; and a controller configured to operate the vibrating structure gyroscope in the diagnostic mode such that the one or more drive transducers drive the structure at a frequency other than a resonant frequency of the structure.

## Description

This disclosure relates to a gyroscope system.

### BACKGROUND

Gyroscope systems comprise vibrating structure gyroscopes (VSGs) that measure angular rate. However, rate output errors occur due to bias errors in the device components. It is therefore desirable to improve gyroscope systems, and in particular, reduce errors in the measured angular rate.

One particularly problematic bias error for these devices is cross-talk bias (also referred to as pick up bias) which primarily arises due to direct coupling of the primary drive signal in the secondary pick off signal. This coupling is indistinguishable from an applied rotation rate and therefore appears as a spurious bias output which degrades the accuracy of the device. A means to measure and substantially eliminate this error is therefore required.

### SUMMARY

According to an aspect, there is provided a gyroscope system comprising: at least one vibrating structure gyroscope having a structure, one or more drive transducers configured to drive the structure and one or more pick off transducers configured to detect oscillation of the structure, the vibrating structure gyroscope being configured to operate in a sensing mode or a diagnostic mode, the vibrating structure gyroscope being configured, during the sensing mode, to measure an angular rate of rotation of the vibrating structure gyroscope; and a controller configured to operate the vibrating structure gyroscope in the diagnostic mode such that the one or more drive transducers drive the structure at a frequency other than a resonant frequency of the structure. By driving the vibrating structure gyroscope at a non-resonant frequency in a diagnostic mode, errors in an output of the vibrating structure gyroscope can be determined and removed.

The controller may be configured to operate the vibrating structure gyroscope in the diagnostic mode so as to determine one or more pick off bias errors for the vibrating structure gyroscope.

The controller may be configured to receive one or more diagnostic pick off transducer signals from the vibrating structure gyroscope when operating the vibrating structure gyroscope in the diagnostic mode. The controller may be configured to determine the one or more pick off bias errors for the vibrating structure gyroscope based on the one or more diagnostic pick off transducer signals.

The controller may be configured to correct an output of the vibrating structure gyroscope when operating the vibrating structure gyroscope in the sensing mode based on the one or more pick off bias errors for the vibrating structure gyroscope.

The controller may be configured to switch the vibrating structure gyroscope from operating in the diagnostic mode to operating in the sensing mode or from operating in the sensing mode to operating in the diagnostic mode. The controller may be configured to suppress oscillation of the structure when the vibrating structure gyroscope is switched from operating in the sensing mode to operating in the diagnostic mode.

The controller may be configured to receive one or more sensing pick off transducer signals from the vibrating structure gyroscope when operating the vibrating structure gyroscope is in the sensing mode. The controller may be configured to correct the output of the vibrating structure gyroscope when operating the vibrating structure gyroscope in the sensing mode by subtracting the one or more pick off bias errors for the vibrating structure gyroscope from the one or more sensing pick off transducer signals.

The one or more drive transducers may be configured to drive the structure when operating the vibrating structure gyroscope in the diagnostic mode such that no oscillation of the structure occurs.

The controller may be configured to determine a ratio between a drive signal for the one or more drive transducers when operating the vibrating structure gyroscope in the sensing mode and a drive signal for the one or more drive transducers when operating the vibrating structure gyroscope in the diagnostic mode.

The controller may be configured to determine the one or more pick off bias errors by multiplying the one or more diagnostic pick off transducer signals by the ratio.

The one or more diagnostic pick off transducer signals may be a magnitude of coupling between the one or more drive transducers and the one or more pick off transducers.

The one or more drive transducers may comprise one or more primary and/or secondary drive transducers. The one or more pick off transducers may comprise one or more primary and/or secondary pick off transducers.

The gyroscope system may comprise a further vibrating structure gyroscope having a structure, one or more drive transducers configured to drive the structure and one or more pick off transducers configured to detect oscillation of the structure, the further vibrating structure gyroscope being configured to operate in a sensing mode or a diagnostic mode, the further vibrating structure gyroscope being configured, during the sensing mode, to measure an angular rate of rotation of the vibrating structure gyroscope.

The controller may be configured to operate one of the vibrating structure gyroscopes in the diagnostic mode, while the other vibrating structure gyroscope is operating in the sensing mode. In this way, errors in one of the vibrating structure gyroscopes can be corrected while the gyroscope system is in operation.

The controller may be configured to cycle through the vibrating structure gyroscopes such that each vibrating structure gyroscope is operated in the diagnostic mode at least once while the other vibrating structure gyroscope is operating in the sensing mode.

The gyroscope system may comprise a total of four vibrating structure gyroscopes, each vibrating structure gyroscope having a structure, one or more drive transducers configured to drive the structure and one or more pick off transducers configured to detect oscillation of the structure, each vibrating structure gyroscope being configured to operate in a sensing mode or a diagnostic mode, each vibrating structure gyroscope being configured, during the sensing mode, to measure an angular rate of rotation of the vibrating structure gyroscope.

The vibrating structure gyroscopes may be arranged in a tetrahedral shape.

The controller may be configured to operate at least one of the vibrating structure gyroscopes in the diagnostic mode, while one or more of the other three vibrating structure gyroscopes are operating in the sensing mode. In this way, errors in one of the vibrating structure gyroscopes can be corrected while the gyroscope system is in operation.

The controller may be configured to cycle through the vibrating structure gyroscopes such that each vibrating structure gyroscope is operated in the diagnostic mode at least once while one or more of the other three vibrating structure gyroscopes are operating in the sensing mode.

According to a second aspect, there is provided an inertial measuring unit comprising the gyroscope system as described above.

According to a third aspect, there is provided a method of operating an angular rate sensor comprising at least one vibrating structure gyroscope having a structure, one or more drive transducers configured to drive the structure and one or more pick off transducers configured to detect oscillation of the structure, the vibrating structure gyroscope being configured to operate in a sensing mode or a diagnostic mode, the vibrating structure gyroscope being configured, during the sensing mode, to measure an angular rate of rotation of the vibrating structure gyroscope, the method comprising: operating the vibrating structure gyroscope in the diagnostic mode such that the one or more drive transducers drive the structure at a frequency other than a resonant frequency of the structure.

Embodiments will be further described and explained by way of example with reference to the accompanying drawings in which
Figure 1 shows a schematic of a gyroscope system;
Figure 2 shows a schematic of a gyroscope system;
Figure 3 shows a method of operating a gyroscope system;
Figure 4 shows a schematic of a gyroscope; and
Figure 5 shows a schematic of a gyroscope system.

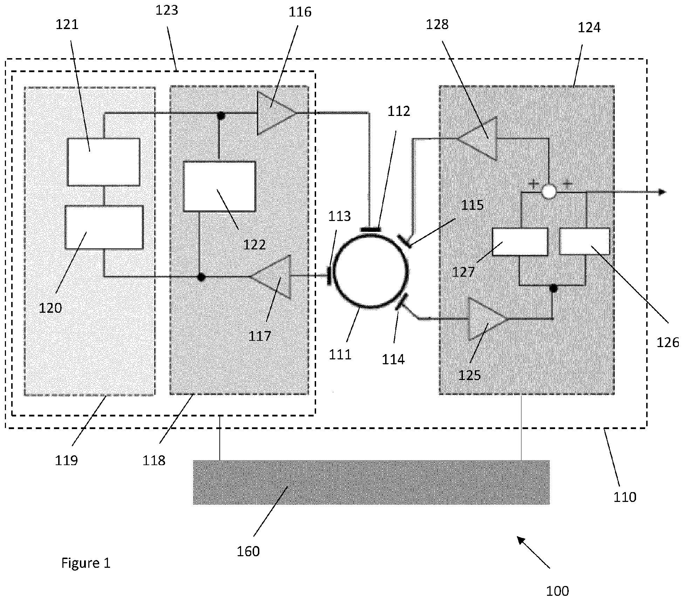

With reference to Figure 1, a gyroscope system 100 comprises a vibrating structure gyroscope 110 and a controller 160. The controller 160 is configured to operate the vibrating structure gyroscopes 110 in a sensing mode or a diagnostic mode.

The vibrating structure gyroscope 110 comprises a structure 111 coupled to a primary drive transducer 112, a primary pick off transducer 113, and a secondary pick off transducer 114. The primary drive transducer 112 drives the structure 111 at a first location, while the primary and secondary pick off transducers 113, 114 output a signal in response to the primary drive transducer 112 driving the structure 111. The primary drive transducer 112, primary pick off transducer 113, and/or secondary pick off transducer 114 may be one of an inductive transducer, a capacitive transducer or a piezoelectric transducer.

As illustrated in Figure 1, the structure 111 is a planar ring. However, in alternative embodiments, the structure 111 may comprise one or more of a ring, a beam, a tuning fork, a cylinder, a hemispherical shell, and a disk.

When the vibrating structure gyroscope 110 is operating in the sensing mode, the primary drive transducer 112 receives a primary sensing drive signal at the resonant frequency of the structure 111. This causes the primary drive transducer 112 to drive the structure 111 to oscillate, forming a radial antinode (i.e. where oscillation of the structure 111 is at a maximum) at the location of the primary drive transducer 112.

The primary pick off transducer 113 detects radial oscillation of the structure 111 at a location 90° from the primary drive transducer 112 where a second radial antinode is formed, and outputs a primary sensing pick off transducer signal to an amplitude control loop 118. This signal is received by a primary pick off amplifier 117 that amplifies the signal before providing the amplified signal to a frequency control loop 119.

So as to maintain resonant oscillation of the structure 111, a phase locked loop 120 adjusts the phase of the amplified signal and a voltage controlled oscillator 121 adjusts the frequency of the amplified signal. The adjusted signal is then transmitted to a primary drive amplifier 116 where the signal is amplified before being provided to the primary drive transducer 112 as a primary sensing drive signal.

The primary pick off amplifier 117 also provides the amplified signal to an automatic gain control circuit 122 which adjusts the gain of the primary drive amplifier 116 to ensure that the amplitude of the primary sensing pick off transducer signal is constant.

As illustrated in Figure 1, the amplitude control loop 118 comprises the primary pick off amplifier 117, the automatic gain control circuit 122 and the primary drive amplifier 116. The frequency control loop 119 comprises the phase locked loop 120 and the voltage controlled oscillator 121. Together, the amplitude control loop 118 and the frequency control loop 119 form a primary loop 123.

The secondary pick off transducer 114 is located at a radial node on the structure 111 (i.e. at a point that is expected not to radially oscillate when the structure 111 is stationary and the primary drive transducer 112 oscillates the structure 111 at its resonant frequency). When the vibrating structure gyroscope 110 is rotated about an axis, Coriolis forces cause the radial antinodes and nodes to move position on the structure 111. If this occurs when the vibrating structure gyroscope 110 is operating in the sensing mode, the secondary pick off transducer 114 detects radial oscillation at the node (where there were none previously) and outputs a secondary sensing pick off transducer signal to secondary loop 124. This signal is received by a secondary pick off amplifier 125 that amplifies the signal.

The amplified signal contains both a `Real' component (i.e. a sine component) and a 'Quadrature' component (i.e. a cosine component). The `Real' component provides the angular rate of rotation of the vibrating structure gyroscope 110, while the 'Quadrature' component is an error generated through imperfections in the system. As the 'Quadrature' component is orthogonal in phase to the `Real' component, it does not contribute to the angular rate of rotation. In an open loop configuration, the amplified signal can therefore be passed through a first demodulator 126 to extract the `Real' component, and hence the angular rate of rotation of the vibrating structure gyroscope 110, which is output from the vibrating structure gyroscope 110.

It is noted that the structure 111 also oscillates tangentially. However, this tangential oscillation is typically not detected by the primary pick off transducer 112 or the secondary pick off transducer 114, and does not therefore affect the output of the vibrating structure gyroscope 110.

As illustrated in Figure 1, in a closed loop configuration, the vibrating structure gyroscope 110 further comprises a secondary drive transducer 115. In a similar manner to the secondary pick off transducer 114, the secondary drive transducer 115 is located at a radial node on the structure 111 (i.e. at a point that is expected not to radially oscillate when the structure 111 is stationary and the primary drive transducer 112 oscillates the structure 111 at its resonant frequency).

The amplified signal from the secondary pick off amplifier 125 is passed through a second demodulator 127 to extract the 'Quadrature' component. The `Real' and 'Quadrature' components are then recombined before being amplified by a secondary drive amplifier 128 to generate a secondary sensing drive signal. This secondary sensing drive signal is received by the secondary drive transducer 115, which causes the secondary drive transducer 115 to null the oscillations at the radial node.

In this embodiment, the amplitude of the secondary sensing drive signal is proportional to the angular rate of rotation of the vibrating structure gyroscope 110, which is output from the vibrating structure gyroscope 110.

As illustrated in Figure 1, the secondary loop 124 comprises the secondary pick off amplifier 125, the first demodulator 126, and optionally, the second demodulator 127 and the secondary drive amplifier 128.

The 'quality-factor' (often referred to as the 'Q-factor' or simply `Q') of the structure 111 is a measure of the quality of the resonance achieved by the structure 111. A high Q means that there is relatively low damping and the structure 111 oscillates at the resonant frequency, at a relatively high amplitude for a relatively long time. A low Q on the other hands means that there is relatively high damping such that oscillations decay away more quickly. Generally, a high Q is desirable for vibrating structure gyroscopes.

When the vibrating structure gyroscope 110 is operated in the sensing mode, the amplitude of the primary sensing drive signal for the primary drive transducer 112 is set so as to achieve radial oscillation that has a large amplitude. This can cause the primary sensing drive signal to become coupled in the primary sensing pick off transducer signal and the secondary sensing pick off transducer signal, by capacitive or inductive mechanisms. Coupling like this may arise on the structure 111 itself due to the proximity of the primary drive transducer 112 to the primary pick off transducer 113 and the secondary pick off transducer 114, or within the electronics of the gyroscope system 100. However, the Q of the structure 111 is affected by temperature meaning that the amplitude of the primary sensing drive signal may vary significantly over temperature as the Q of the structure 111 changes.

The coupling of the primary sensing drive signal in the secondary sensing pick off transducer signal is particularly problematic as the primary sensing drive signal may be indistinguishable from a signal induced by the angular rotation of the vibrating structure gyroscope 110. This introduces a pick off bias error to the output of the vibrating structure gyroscope 110 that varies over temperature (since temperature variation causes the Q of the structure 111 to vary and therefore the amplitude of the primary sensing drive signal to vary).

Coupling of the primary sensing drive signal in the primary sensing pick off transducer signal is also problematic but to a lesser extent, as this degrades the accuracy of the detection of the resonance of the structure 111. The amplitude of the primary sensing pick off transducer signal arising from the resonance of the structure 111 is, however, large and therefore the effect is relatively small.

Th gyroscope system 100 provides a means to measure the magnitude of the coupling described above for a given primary sensing drive signal and hence determine one or more pick off bias errors. This is achieved by operating the vibrating structure gyroscope 111 in the diagnostic mode, as described below.

When the vibrating structure gyroscope 110 is operating in the diagnostic mode, the primary drive transducer 112 receives a primary diagnostic drive signal with a large amplitude at a frequency other than the resonant frequency of the structure 111 (i.e. at a non-resonant frequency). This causes the primary drive transducer 112 to drive the structure 111 at the non-resonant frequency.

The non-resonant frequency should be far removed from the resonant frequency of the structure 111 so that there is no significant resonant motion of the structure 111. In particular, the non-resonant frequency is chosen so as not to induce oscillation of the structure 111, i.e. the structure 111 does not oscillate in the diagnostic mode. This can be achieved, for example, by setting the difference between the non-resonant frequency and the resonant frequency of the structure 111 to be greater than 100 Hz.

Since the structure 111 is driven at a non-resonant frequency, the primary pick off transducer 113 does not detect any oscillation of the structure 111. However, due to the coupling effect described above, the primary pick off transducer 113 still outputs a primary diagnostic pick off transducer signal, which is a measure of the magnitude of the coupling in the primary loop 123. This signal is received by the primary loop 123 and provided to the controller 160. In a similar manner, the secondary pick off transducer 114 does not detect any oscillation of the structure 111, but still outputs a secondary diagnostic pick off transducer signal, which is a measure of the magnitude of the coupling in the secondary loop 124. This signal is received by the secondary loop 124 and provided to the controller 160.

The controller 160 then corrects the primary and secondary sensing drive signals when operating the vibrating structure gyroscope 110 in the sensing mode.

In particular, the controller 160 determines a ratio of the primary sensing drive signal obtained at any time during the sensing mode to the primary diagnostic drive signal, and multiplies the secondary diagnostic pick off transducer signal by this ratio to determine a secondary pick off bias error. The secondary pick off bias error is then subtracted from the secondary sensing drive signal for the secondary drive transducer 115 so that the secondary pick off bias error is not nulled by the secondary drive transducer 115. This prevents the secondary drive transducer 115 from producing a bias offset, and in this way, the secondary pick off bias error is removed from the output of the vibrating structure gyroscope 110, providing a more accurate value of the angular rate of rotation of the vibrating structure gyroscope 110.

The controller 160 can similarly correct the primary sensing drive signal for the primary drive transducer 112 when operating the vibrating structure gyroscope 110 in the sensing mode by multiplying the primary diagnostic pick off transducer signal obtained in the diagnostic mode by the ratio of the primary sensing drive signal and the primary diagnostic drive signal to determine a primary pick off bias error. The primary pick off bias error is then subtracted from the primary sensing drive signal for the primary drive transducer 112 so that the primary pick off bias error is not nulled by the primary drive transducer 112. This prevents degradation of the accuracy of the amplitude or phase of the primary sensing drive signal.

The amplitude of the primary diagnostic drive signal is fixed at a value that maximises the amplitude of the primary and secondary diagnostic pick off transducer signals in order to improve the sensitivity of the gyroscope system 100.

The primary drive transducer 112 may drive the structure 111 at a non-resonant frequency above the resonant frequency of the structure 111 and/or at a non-resonant frequency below the resonant frequency of the structure 111. In the case that the primary drive transducer 112 drives the structure 111 at non-resonant frequencies both above and below the resonant frequency of the structure 111, a plurality of pick off bias errors may be determined in the sensing mode for each of the primary loop 123 and the secondary loop 124. Any frequency dependence on the coupling of the primary sensing drive signal in the primary sensing pick off transducer signal and the secondary sensing pick off transducer signal can then be removed by averaging the plurality of pick off bias errors for the primary loop 123 and the secondary loop 124.

The controller 160 may be configured to switch the vibrating structure gyroscope 110 between the sensing mode and the diagnostic mode, or the diagnostic mode and the sensing mode. However, it will be appreciated that this will introduce some dead time into the gyroscope system 100 in order to allow the structure 111 to stop oscillating at the resonant frequency. This dead time can be reduced by actively suppressing the radial oscillations of the vibrating structure gyroscope 110, minimising any delay when switching between the two operating modes.

In this case, the primary pick off transducer 113 detects radial oscillation of the structure 111 and outputs a primary damping pick off transducer signal to the amplitude control loop 118. This signal is amplified by the primary pick off amplifier 117, and provided to the frequency control loop 119. So as to suppress the detected radial oscillation, the phase locked loop 120 adjusts the phase of the amplified signal and the voltage controlled oscillator 121 adjusts the frequency of the amplified signal. The adjusted signal is then transmitted to the primary drive circuit 116 where the signal is amplified before being provided to the primary drive transducer 112 as a primary damping drive signal. The primary drive transducer 112 then drives the structure 111 to null the detected radial oscillations.

Additionally, or alternatively, in a closed loop configuration, the secondary pick off transducer 114 detects radial oscillation of the structure 111 and outputs a secondary damping pick off transducer signal to the secondary loop 124. This signal is amplified by the secondary pick off amplifier 125 and provided to the first demodulator 126, where the 'Real' component is extracted, and to the second demodulator 127, where the 'Quadrature' component is extracted. The 'Real' and 'Quadrature' components are recombined and transmitted to the secondary drive amplifier 128 which amplifies the signal before providing the amplified signal to the secondary drive transducer 115 as a secondary damping drive signal. The secondary drive transducer 115 then drives the structure 111 to null the detected radial oscillation.

Once the structure 111 is no longer oscillating, the vibrating structure gyroscope 110 may be operated in the desired mode.

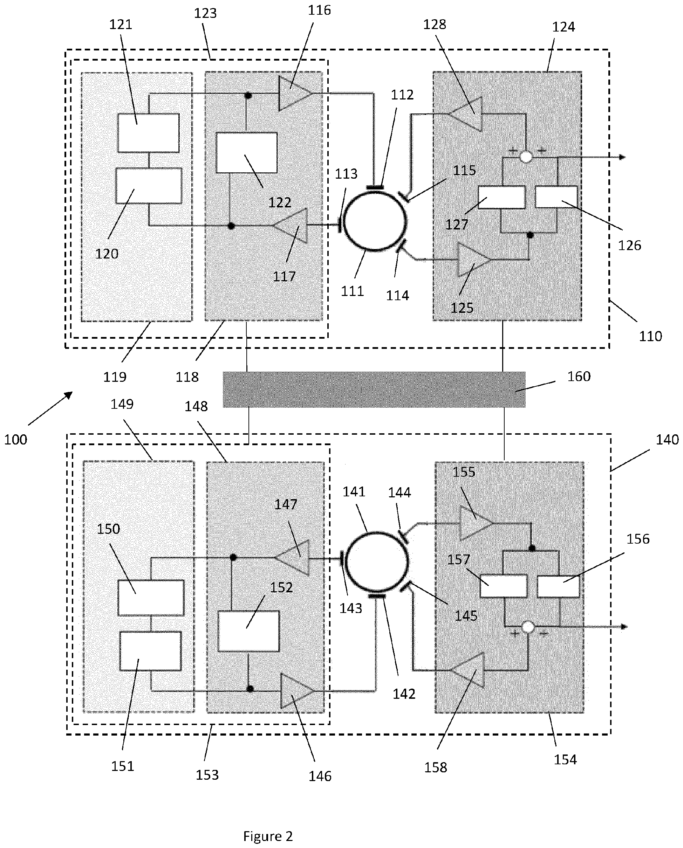

As illustrated in Figure 2, the gyroscope system 100 may comprise a further vibrating structure gyroscope 140. In a similar manner to the vibrating structure gyroscope 110, the further vibrating structure gyroscope 140 comprises a structure 141, an amplitude control loop 148 and a frequency control loop 149 forming a primary loop 153, a phase locked loop 150, a primary drive amplifier 146, an automatic gain control circuit 152, a primary drive transducer 142, a primary pick off transducer 143, a primary pick off amplifier 147, a voltage controlled oscillator 151, a secondary loop 154, a secondary pick off transducer 144, a secondary pick off amplifier 155, and a first demodulator 156. The further vibrating structure gyroscope 140 may also comprise a secondary drive transducer 145, a second demodulator 157, and a secondary drive amplifier 158.

Operation of the further vibrating structure gyroscope 140 when the further vibrating structure gyroscope 140 is operated in the sensing mode is the same as operation of the vibrating structure gyroscope 110 when the vibrating structure gyroscope 110 is operated in the sensing mode. Further, operation of the further vibrating structure gyroscope 140 when the further vibrating structure gyroscope 140 is operated in the diagnostic mode is the same as operation of the vibrating structure gyroscope 110 when the vibrating structure gyroscope 110 is operated in the diagnostic mode. Additionally, operation of the further vibrating structure gyroscope 140 when switching between the sensing mode and diagnostic mode or the diagnostic mode and the sensing mode is the same as operation of the vibrating structure gyroscope 110 when switching between the sensing mode and the diagnostic mode or the diagnostic mode and the sensing mode. A repeated description is therefore omitted.

The vibrating structure gyroscope 110 and the further vibrating structure gyroscopes 140 may operate in the sensing mode or the diagnostic at the same time. However, in alternative embodiments, the vibrating structure gyroscope 110 and the further vibrating structure gyroscopes 140 operate in different modes.

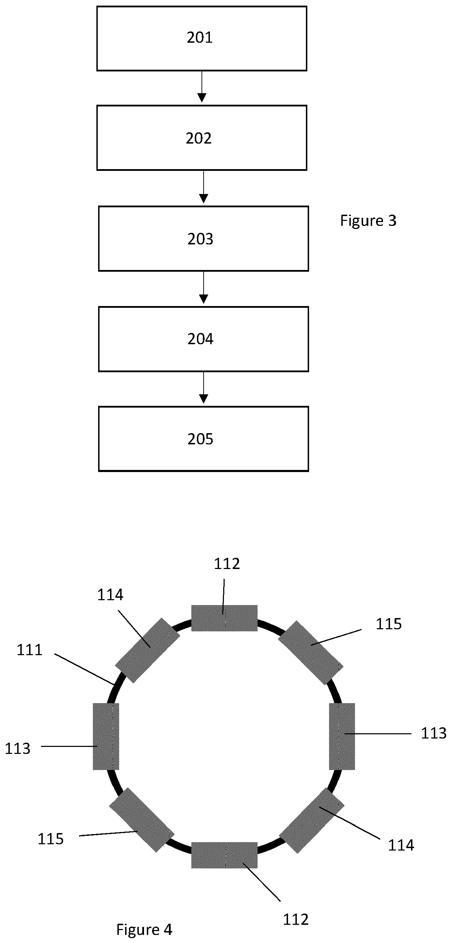

With reference to Figure 3, in a first step 201, the controller 160 operates the vibrating structure gyroscope 110 in the sensing mode and the further vibrating structure gyroscope 140 in the diagnostic mode. Once the controller 160 has determined a primary and secondary pick off bias error for the further vibrating structure gyroscope 140, in a second step 202, the controller 160 switches the further vibrating structure gyroscope to operate in the sensing mode and corrects the primary and secondary sensing drive signals of the further vibrating structure gyroscope 140. Then in a third step 203, the controller 160 switches the vibrating structure gyroscope 110 to operate in the diagnostic mode.

Once the controller 160 has determined a primary and secondary pick off bias error for the vibrating structure gyroscope 110, in a fourth step 204, the controller 160 switches the vibrating structure gyroscope 110 to operate in the sensing mode and corrects the primary and secondary sensing drive signals of the vibrating structure gyroscope 110. Then in a fifth step 205, the controller 160 switches the further vibrating structure gyroscope 140 to operate in the diagnostic mode.

Thus, the controller 160 may be configured to continuously cycle through the vibrating structure gyroscopes 110, 140 such that each vibrating structure gyroscope 110, 140 is operated in the diagnostic mode at least once while the other vibrating structure gyroscope 110, 140 is operating in the sensing mode. This allows the gyroscope system 100 to correct an output of the vibrating structure gyroscopes 110, 140 while the gyroscope system 100 is in operation.

The vibrating structure gyroscope 110 may operate in the same configuration when the vibrating structure gyroscope 110 is operating in the sensing mode as the further vibrating structure gyroscope 140 when the further vibrating structure gyroscope 140 is operating in the sensing mode, i.e. in a closed loop configuration or an open loop configuration. Alternatively, the vibrating structure gyroscope 110 may operate in a closed loop configuration when the vibrating structure gyroscope 110 is operating in the sensing mode, and the further vibrating structure gyroscope 140 may operate in an open loop configuration when the further vibrating structure gyroscope 140 is operating in the sensing mode, or vice versa.

As illustrated in Figure 4, in some embodiments, the vibrating structure gyroscope 110 may comprise a pair of primary drive transducers 112 a pair of primary pick off transducers 113 and a pair of secondary pick of transducers 114. The vibrating structure gyroscope 110 may also comprise a pair of secondary drive transducers 115. Each pair may be arranged opposite each other around the vibrating structure gyroscope 110. However, this is not necessary, i.e. each pair may be arranged in any position relative to each other. The further vibrating structure gyroscope 140 may be identical to the vibrating structure gyroscope 110.

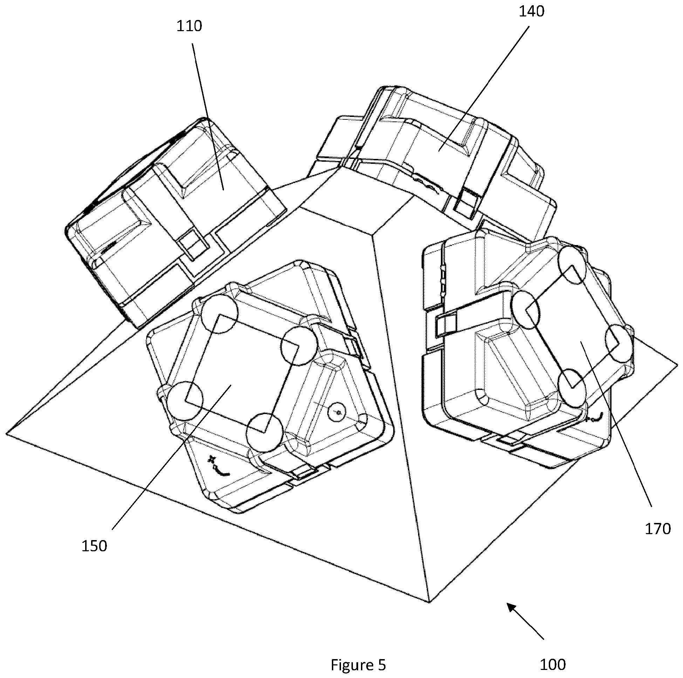

With reference to Figure 5, in some embodiments, the gyroscope system 100 comprises at least four vibrating structure gyroscopes 110, 140, 150, 170 arranged in a tetrahedral shape. In this case, the controller 160 operates at least one of the vibrating structure gyroscopes 110, 140, 150, 170 in the diagnostic mode, while one or more of the other vibrating structure gyroscopes 110, 140, 150, 170 are operating in the sensing mode.

A tetrahedral arrangement enables the angular rate of rotation of the gyroscope system 100 to be determined around all three principle axes (x, y and z) by mathematically transforming the outputs of any three of the four vibrating structure gyroscopes 110, 140, 150, 170 when operating these vibrating structure gyroscopes in the sensing mode as is well known by those skilled in the art. The angular rate of rotation of the gyroscope system 100 can be determined while the fourth vibrating structure gyroscope is operating in the diagnostic mode. Unlike some other diagnostic tests, the pick off bias errors do not need to be corrected for the effect of the angular rotation of the gyroscope system 100 around the axis of the fourth vibrating structure gyroscope as the diagnostic mode is performed with the structure 111 off resonance and without oscillating the structure 111, i.e. the pick off bias errors are not sensitive to the angular rotation of the gyroscope system 100.

Various aspects of the gyroscope system disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

## Claims

1. A gyroscope system comprising:
at least one vibrating structure gyroscope having a structure, one or more drive transducers configured to drive the structure and one or more pick off transducers configured to detect oscillation of the structure, the vibrating structure gyroscope being configured to operate in a sensing mode or a diagnostic mode, the vibrating structure gyroscope being configured, during the sensing mode, to measure an angular rate of rotation of the vibrating structure gyroscope; and
a controller configured to operate the vibrating structure gyroscope in the diagnostic mode such that the one or more drive transducers drive the structure at a frequency other than a resonant frequency of the structure.

2. The gyroscope system of claim 1, wherein the controller is configured to operate the vibrating structure gyroscope in the diagnostic mode so as to determine one or more pick off bias errors for the vibrating structure gyroscope.

3. The gyroscope system of claim 2, wherein the controller is configured to receive one or more diagnostic pick off transducer signals from the vibrating structure gyroscope when operating the vibrating structure gyroscope in the diagnostic mode, wherein the controller is configured to determine the one or more pick off bias errors for the vibrating structure gyroscope based on the one or more diagnostic pick off transducer signals.

4. The gyroscope system of claim 2 or 3, wherein the controller is configured to correct an output of the vibrating structure gyroscope when operating the vibrating structure gyroscope in the sensing mode based on the one or more pick off bias errors for the vibrating structure gyroscope.

5. The gyroscope system of claim 4, wherein the control is configured to receive one or more sensing pick off transducer signals from the vibrating structure gyroscope when operating the vibrating structure gyroscope in the sensing mode, wherein the controller is configured to correct the output of the vibrating structure gyroscope when operating the vibrating structure gyroscope in the sensing mode by subtracting the one or more pick off bias errors for the vibrating structure gyroscope from the one or more sensing pick off transducer signals.

6. The gyroscope system of any preceding claim, wherein the one or more drive transducers are configured to drive the structure when operating the vibrating structure gyroscope in the diagnostic mode such that substantially no oscillation of the structure occurs.

7. The gyroscope system of any preceding claim, wherein the controller is configured to switch the vibrating structure gyroscope from operating in the diagnostic mode to operating in the sensing mode or from operating in the sensing mode to operating in the diagnostic mode, wherein the controller is configured to suppress oscillation of the structure when the vibrating structure gyroscope is switched from operating in the sensing mode to operating in the diagnostic mode.

8. The gyroscope system of any preceding claim, wherein the one or more drive transducers comprise one or more primary and/or secondary drive transducers, and wherein the one or more pick off transducers comprise one or more primary and/or secondary pick off transducers.

9. The gyroscope system of any preceding claim, comprising a further vibrating structure gyroscope having a structure, one or more drive transducers configured to drive the structure and one or more pick off transducers configured to detect oscillation of the structure, the further vibrating structure gyroscope being configured to operate in a sensing mode or a diagnostic mode, the further vibrating structure gyroscope being configured, during the sensing mode, to measure an angular rate of rotation of the vibrating structure gyroscope.

10. The gyroscope system of claim 9, wherein the controller is configured to operate one of the vibrating structure gyroscopes in the diagnostic mode, while the other vibrating structure gyroscope is operating in the sensing mode.

11. The gyroscope system of claim 10, wherein the controller is configured to cycle through the vibrating structure gyroscopes such that each vibrating structure gyroscope is operated in the diagnostic mode at least once while the other vibrating structure gyroscope is operating in the sensing mode.

12. The gyroscope system of any preceding claim, comprising a total of four vibrating structure gyroscopes, each vibrating structure gyroscope having a structure, one or more drive transducers configured to drive the structure and one or more pick off transducers configured to detect oscillation of the structure, each vibrating structure gyroscope being configured to operate in a sensing mode or a diagnostic mode, each vibrating structure gyroscope being configured, during the sensing mode, to measure an angular rate of rotation of the vibrating structure gyroscope.

13. The gyroscope system of claim 12, wherein the vibrating structure gyroscopes are arranged in a tetrahedral shape.

14. An inertial measuring unit comprising the gyroscope system as claimed in any preceding claim.

15. A method of operating an angular rate sensor comprising at least one vibrating structure gyroscope having a structure, one or more drive transducers configured to drive the structure and one or more pick off transducers configured to detect oscillation of the structure, the vibrating structure gyroscope being configured to operate in a sensing mode or a diagnostic mode, the vibrating structure gyroscope being configured, during the sensing mode, to measure an angular rate of rotation of the vibrating structure gyroscope, the method comprising:
operating the vibrating structure gyroscope in the diagnostic mode such that the one or more drive transducers drive the structure at a frequency other than a resonant frequency of the structure.
